# EUROPÄISCHE PATENTANMELDUNG

(11) **EP 3 756 985 A1**
(43) Veröffentlichungstag der Anmeldung: **30.12.2020**
(21) Anmeldenummer: 20178264.6
(22) Anmeldetag: 04.06.2020
(51) Int. Cl.: B62J 43/28, B62J 43/30, B62J 43/13, B62J 45/421, B62J 45/413, B62M 6/50, B62M 6/90, B62M 6/55, B62K 19/30, B62K 19/34, H02J 50/05, H02J 50/10

(54) **ANTRIEBSVORRICHTUNG UND ELEKTROFAHRRAD MIT DER ANTRIEBSVORRICHTUNG**

(30) Priorität: 27.06.2019 DE 102019209400
(71) Anmelder: Robert Bosch GmbH, 70442 Stuttgart (DE)
(72) Erfinder: Stewing, Felix, 71711 Steinheim (DE)

(57) **Zusammenfassung**

Antriebsvorrichtung (200), umfassend wenigstens einen Elektromotor (220), ein Batteriemodul (210), umfassend zumindest eine Batteriezelle (212), und ein Gehäuse (230), welches dazu eingerichtet ist, den Elektromotor (220) und das Batteriemodul (210) aufzunehmen, wobei die Antriebsvorrichtung (200) dazu eingerichtet ist, zumindest teilweise in einer Ausnehmung eines Unterrohrs eines Elektrofahrrads angeordnet zu sein, wobei die Antriebsvorrichtung (200) mindestens eine Energieübertragungseinheit (250), welche dazu eingerichtet ist, induktiv und/oder kapazitativ Energie an das Elektrofahrrad zu übertragen.

## Beschreibung

Die vorliegende Erfindung betrifft eine Antriebsvorrichtung und ein Elektrofahrrad mit der Antriebsvorrichtung, wobei die Antriebsvorrichtung einen Elektromotor und ein Batteriemodul aufweist und dazu eingerichtet ist, induktiv und/oder kapazitiv Energie an das Elektrofahrrad zu übertragen und/oder zu empfangen.

### Stand der Technik

Ein Treten von Pedalen eines Fahrrads durch einen Nutzer wird bei Elektrofahrrädern motorisch mittels eines elektrischen Antriebs unterstützt. Elektrofahrräder weisen dazu häufig eine Antriebseinheit mit einem Elektromotor im Bereich einer Tretachse des Elektrofahrrads auf, wobei der Elektromotor meist achsparallel zur Tretachse angeordnet ist. Die Antriebseinheit ist typischerweise fest am Elektrofahrrad montiert-Mit anderen Worten ist die Antriebseinheit nur schwer für einen Nutzer demontierbar. Elektrofahrräder sind folglich relativ schwer, da die Antriebseinheit und/oder ein Batteriemodul zur Energieversorgung der Antriebseinheit häufig ein gegenüber dem sonstigen Fahrradgewicht relativ hohes Gewicht aufweisen. Eine Energieversorgung einer Komponente eines Fahrrads oder eines Elektrofahrrads erfolgt normalerweise mittels eines Kabels zwischen der Komponente und dem Batteriemodul, beispielsweise ist die Komponente eine Lampe oder ein Sensor. Alternativ erfolgt die Energieversorgung einer Komponente des Fahrrads mittels einer separaten Batterie an der jeweiligen Komponente, was beispielsweise für Schaltwerke oder Lampen offenbart ist.

Das Dokument EP 2 731 858 B1 offenbart ein Fahrrad umfassend einen Hilfsmotor, wobei der Hilfsmotor eine Energiespeichervorrichtung zur Speicherung von Energie und eine Antriebsvorrichtung sowie eine Getriebeeinrichtung aufweist. Der Hilfsmotor ist am Unterrohr des Fahrrads und im Wesentlichen parallel zum Unterrohr angebracht. Das in der Schrift EP 2 731 858 B1 offenbarte Konzept resultiert für einen Nutzer in einer gegenüber typischen Elektrofahrrädern vereinfachten Montage des Hilfsmotors am Elektrofahrrad. Die offenbarten elektrischen Steckverbindungen des Hilfsmotors zum Fahrrad sind allerdings zumindest mittel- bis langfristig anfällig für schädliche Umgebungseinflüsse, beispielsweise für Korrosion. Ferner kann eine häufige Demontage beziehungsweise Montage des Hilfsmotors am Fahrrad die mechanischen Befestigungselemente zur Befestigung des Hilfsmotors in dem vertieften Bereich des Unterrohrs beschädigen.

Die Aufgabe der vorliegenden Erfindung ist es, eine Anordnung einer Antriebsvorrichtung in einem Unterrohr eines Fahrrads zu verbessern.

### Offenbarung der Erfindung

Die vorliegende Aufgabe wird durch eine Antriebsvorrichtung gemäß des unabhängigen Anspruchs 1 sowie durch ein Elektrofahrrad mit dieser Antriebsvorrichtung gemäß dem unabhängigem Anspruch 11 gelöst.

Die vorliegende Erfindung betrifft eine Antriebsvorrichtung, umfassend wenigstens einen Elektromotor und ein Batteriemodul, umfassend zumindest eine Batteriezelle. Die Antriebsvorrichtung umfasst ferner ein Gehäuse. Das Gehäuse ist dazu eingerichtet, den Elektromotor und das Batteriemodul aufzunehmen. Die Antriebsvorrichtung ist dazu eingerichtet, zumindest teilweise in wenigstens einer Ausnehmung eines Unterrohrs eines Elektrofahrrads angeordnet zu sein. Des Weiteren weist die Antriebsvorrichtung mindestens eine Energieübertragungseinheit auf, welche dazu eingerichtet ist, Energie induktiv und/oder kapazitativ an das Elektrofahrrad zu übertragen. Mit anderen Worten ist die Energieübertragungseinheit dazu eingerichtet, kontaktlos beziehungsweise kabellos Energie an das Elektrofahrrad zu übertragen und/oder zu empfangen. Bevorzugt umfasst die Energieübertragungseinheit eine Spule. Ein Empfang von Energie mittels der Energieübertragungseinheit der Antriebsvorrichtung erfolgt vorteilhafterweise, wenn eine Steckerschnittstelle zum Laden des Elektrofahrrads am Elektrofahrrad angeordnet ist. Durch die Antriebsvorrichtung werden Steckverbindungen zwischen der Antriebsvorrichtung und dem Elektrofahrrad vorteilhafterweise vermieden. Vorteilhafterweise ist die mittels der Energieübertragungseinheit zu übertragende Energie an das Elektrofahrrad gegenüber dem Energieverbrauch des Elektromotors zum Antrieb des Elektrofahrrads gering. Durch die kabellose Energieübertragung an Verbraucher beziehungsweise Komponenten des Elektrofahrrads wird insbesondere wenigstens ein Sensor des Elektrofahrrads und/oder eine Lampe beziehungsweise eine Beleuchtungsvorrichtung des Elektrofahrrads und/oder eine Anzeigevorrichtung des Elektrofahrrads und/oder eine Eingabevorrichtung des Elektrofahrrads und/oder eine Gangschaltung des Elektrofahrrads mit Energie versorgt. Durch die induktive und/oder kapazitative beziehungsweise kabellose Energieübertragung wird vorteilhafterweise Korrosion an einer elektrischen Steckverbindung vermieden. Des Weiterein resultiert der Vorteil, dass eine Demontage und/oder eine Montage der Antriebsvorrichtung in der Ausnehmung des Unterrohrs vereinfacht und robuster gegenüber mechanischen Beschädigungen wird.

In einer bevorzugten Ausgestaltung erstreckt sich das Gehäuse in eine Längsrichtung, wobei die Energieübertragungseinheit im Bereich einer außenliegenden Fläche des Gehäuses angeordnet ist. Vorteilhafterweise ist die Energieübertragungseinheit im Bereich einer außenliegenden Querschnittsfläche des Gehäuses angeordnet. Beispielsweise ist das Gehäuse im Wesentlichen zylindrisch oder mit elliptischem Querschnitt ausgestaltet, wobei die Energieübertragungseinheit an einer äußeren Bodenfläche und/oder an einer äußeren Deckelfläche des Gehäuses angeordnet ist. Durch die Ausgestaltung in Form der Anordnung der Energieübertragungseinheit im Bereich einer außenliegenden Fläche entsteht der Vorteil, dass eine effiziente induktive und/oder kapazitive Energieübertragung von der Antriebsvorrichtung an das Elektrofahrrad und/oder von dem Elektrofahrrad an die Antriebsvorrichtung resultiert.

In einer weiteren Ausgestaltung ist die Energieübertragungseinheit an einem Aufnahmesicherungselement des Gehäuses angeordnet, wobei das Aufnahmesicherungselement dazu eingerichtet ist, das Gehäuse in der Ausnehmung des Unterrohrs des Elektrofahrrads zu befestigen. Beispielsweise ist das Aufnahmesicherungselement des Gehäuses ein Rasthaken oder eine Aufnahme für einen Rasthaken, welcher beziehungsweise welche die Energieübertragungseinheit umfasst. Durch diese Ausgestaltung resultiert vorteilhafterweise ein sehr geringer Abstand zwischen der Energieübertragungseinheit und einer Energieempfangseinheit des Elektrofahrrads, wodurch eine sehr effiziente Energieübertragung ermöglicht wird. Die Energieempfangseinheit umfasst vorteilhafterweise eine Spule.

In einer Weiterführung umfasst die Antriebsvorrichtung mindestens eine Kommunikationsschnittstelle, welche dazu eingerichtet ist, Daten per Funk von wenigstens einer Komponente des Elektrofahrrads zu empfangen. Die Daten repräsentieren insbesondere ein Sensorsignal von einer Sensoreinheit zur Erfassung einer Trittgröße eines Nutzers des Elektrofahrrads. Beispielsweise wird die Sensoreinheit des Elektrofahrrads durch die Antriebsvorrichtung mit Energie versorgt. Die Sensoreinheit ist vorteilhafterweise mittels eines Magnetfeldsensors dazu eingerichtet, wenigstens einen Verlauf beziehungsweise eine Änderung mindestens eines Magnetfeldes zu erfassen. Das Magnetfeld ändert sich insbesondere in Abhängigkeit eines Drehmoments verursachter mechanische Spannungen an einer koaxial zur Tretachse angeordneten im Wesentlichen als Hülse ausgeführten und mit der Tretachse drehfest verbundenen Welle, welche eine Magnetisierung aufweist. Die Kommunikationsschnittstelle empfängt vorteilhafterweise mittels der Sensoreinheit ein Sensorsignal per Funk, welches die erfasste Änderung der Magnetisierung beziehungsweise das Drehmoment des Nutzers beziehungsweise eine erfasste Trittgröße des Nutzers des Elektrofahrrads repräsentiert. Optional ist die Kommunikationsschnittstelle dazu eingerichtet, Daten, welche beispielsweise eine Eingabe des Nutzers repräsentierten, zu empfangen. Durch die Weiterführung resultiert der Vorteil, dass ein Datenaustausch zwischen dem Elektrofahrrad und der Antriebsvorrichtung kabellos erfolgt. Durch die Weiterführung wird folglich eine Steckverbindung zum Datenaustausch zwischen Komponenten des Elektrofahrrads und der Antriebsvorrichtung vermieden. Des Weiterein resultiert durch diese Weiterführung der Vorteil, dass eine Demontage und/oder eine Montage der Antriebsvorrichtung in der Ausnehmung des Unterrohrs einfacher wird und mechanischen Beschädigungen reduziert werden.

In einer vorteilhaften Weiterführung ist die Energieübertragungseinheit und/oder die Energieempfangseinheit dazu eingerichtet, Daten, insbesondere digitale Daten, durch eine Modulation der Energieübertragung an die Energieempfangseinheit beziehungsweise an die Energieübertragungseinheit zu übertragen. Mit anderen Worten werden in dieser Weiterführung die Energieübertragungseinheit und/oder die Energieempfangseinheit zum Übertragen von Energie und Daten verwendet. Dadurch wird der Aufbau der Antriebsvorrichtung kompakter und dessen Antriebsvorrichtung zuverlässiger. Des Weiteren kann die Spule in dieser Weiterführung beispielsweise mit einem größeren Querschnitt ausgeführt werden.

In einer besonders bevorzugten Ausführung weist die Antriebsvorrichtung eine Steuereinheit auf, wobei die Steuereinheit ein Batterie Management System für das Batteriemodul und ein Steuergerät für den Elektromotor umfasst. Durch die Ausführung werden vorteilhafterweise die typischerweise in Elektrofahrrädern angeordneten zwei Recheneinheiten, welche dazu eingerichtet sind, den Elektromotor beziehungsweise einen Lade- und Entladevorgang des Batteriemoduls zu steuern, durch eine zentrale Steuereinheit ersetzt. Diese Ausführung reduziert die Kosten zur Herstellung der Antriebsvorrichtung und ermöglicht eine effiziente Kühlung des Batterie Management System und des Steuergeräts. Es resultiert ferner durch diese Ausführung der Vorteil, dass Bauraum und Gewicht gegenüber einer Kombination einer typischen Antriebseinheit mit einem typischen Batteriemodul eingespart wird.

In einer weiteren Ausführung umfasst die Steuereinheit das Batterie Management System und das Steuergerät zumindest teilweise auf einer gemeinsamen Leiterplatte. Diese Ausführung reduziert die Kosten zur Herstellung der Antriebsvorrichtung weiter und ermöglicht eine effizientere Kühlung des Batterie Management System und des Steuergeräts. Es resultiert ferner der Vorteil, dass in dieser Ausführung weiterer Bauraum und/oder weiteres Gewicht gegenüber einer Kombination einer typischen Antriebseinheit mit einem typischen Batteriemodul eingespart wird.

Vorzugsweise verschließt das Gehäuse der Antriebsvorrichtung zumindest den Elektromotor und/oder das Batteriemodul gegenüber der Umgebung wasser- und/oder luftdicht. Dadurch resultiert eine robuste und langlebige Antriebsvorrichtung, welche in vielfältigen Betriebsbedingungen eingesetzt werden kann.

Es kann vorgesehen sein, dass das Gehäuse der Antriebsvorrichtung mindestens zweiteilig ausgeführt ist. Ein erster Gehäuseteil des Gehäuses umfasst das Batteriemodul und ein zweiter Gehäuseteil des Gehäuses umfasst den Elektromotor. Durch diese Ausführung kann beispielsweise der erste Gehäuseteil separat vom zweiten Gehäuseteil entnommen werden, wodurch die Montage beziehungsweise die Demontage, beispielsweise zum Laden des Batteriemoduls, vereinfacht wird und robuster wird, da der zweite Gehäuseteil beispielsweise in der Ausnehmung im Unterrohr des Elektrofahrrads verbleibt. Eine Handhabung des ersten Gehäuseteils und/oder des zweiten Gehäuseteils wird auch dadurch vereinfacht, dass die einzelnen Gehäuseteile gegenüber einem einteiligen Gehäuse ein reduziertes Gewicht aufweisen. Die Robustheit und Langlebigkeit der Antriebseinheit wird vorteilhafterweise in dieser Ausführung weiter dadurch erhöht, dass eine Demontage- und Montagehäufigkeit des zweiten Gehäuseteils und eine Wahrscheinlichkeit einer mechanischen Beschädigung für viele Komponenten der Antriebseinheit reduziert werden. Vorteilhafterweise sind der erste Gehäuseteil und der zweite Gehäuseteil zusätzlich jeweils dazu eingerichtet sind, in separaten Ausnehmungen im Unterrohr des Elektrofahrrads angeordnet zu sein. Dadurch kann die Stabilität eines Rahmens des Elektrofahrrads erhöht werden.

In einer Weiterführung der Ausführung weist der zweite Gehäuseteil des Gehäuses die Steuereinheit auf. Durch eine Anordnung der Steuereinheit im zweiten Gehäuseteil wird eine Steuerung des Ladevorgangs mittels des Batterie Management Systems bei Entnahme des zweiten Gehäuseteils zum Laden ermöglicht.

Die Erfindung betrifft auch ein Elektrofahrrad, welches dazu eingerichtet ist, eine erfindungsgemäße Antriebsvorrichtung aufzunehmen, wobei das Elektrofahrrad mindestens eine Energieempfangseinheit an wenigstens einer Ausnehmung im Unterrohr aufweist, welche dazu eingerichtet ist, induktiv und/oder kapazitativ Energie von der Antriebsvorrichtung übertragen zu bekommen beziehungsweise zu erhalten beziehungsweise zu empfangen. Durch das Elektrofahrrad resultiert der Vorteil, dass insbesondere Verbraucher mit einem gegenüber dem Elektromotor geringen Energieverbrauch beziehungsweise mit einer geringen elektrischen Leistung zuverlässig und effizient mit Energie beziehungsweise Strom versorgt werden, wobei beispielsweise eine Wahrscheinlichkeit für Korrosion an Steckverbindungen reduziert wird. Dadurch wird die Zuverlässigkeit des Elektrofahrrads während der Lebensdauer des Elektrofahrrads erhöht. Des Weiteren ist eine Demontage und/oder Montage der Antriebsvorrichtung des Elektrofahrrads vorteilhafterweise gegenüber dem Stand der Technik einfacher, da eine Steckverbindung entfällt.

In einer Ausgestaltung des Elektrofahrrads ist die Energieempfangseinheit an einem Aufnahmeelement im Bereich der wenigstens einen Ausnehmung des Unterrohrs angeordnet. Das Aufnahmeelement ist dazu eingerichtet, das Gehäuse der Antriebsvorrichtung in der Ausnehmung des Unterrohrs des Elektrofahrrads zu befestigen. Beispielsweise ist das Aufnahmeelement des Unterrohrs ein Rasthaken oder eine Aufnahme für einen Rasthaken, welcher beziehungsweise welche die Energieempfangseinheit umfasst. Durch diese Ausgestaltung resultiert vorteilhafterweise ein geringer Abstand zwischen der Energieübertragungseinheit der Antriebsvorrichtung und der Energieempfangseinheit des Unterrohrs beziehungsweise des Elektrofahrrads, wodurch eine effiziente Energieübertragung ermöglicht wird.

In einer weiteren Ausgestaltung umfasst das Elektrofahrrad eine Sensoreinheit zur Erfassung einer Trittgröße eines Nutzers des Elektrofahrrads, wobei die Sensoreinheit vorzugsweise im Bereich der Tretachse des Elektrofahrrads angeordnet ist. Durch diese Ausgestaltung wird die Trittgröße effizient an der Tretachse erfasst, insbesondere wird die Trittgröße in dieser Ausgestaltung vorteilhafterweise reibungsfrei beziehungsweise kontaktlos erfasst.

In einer Weiterführung ist die Sensoreinheit dazu eingerichtet ist, ein Sensorsignal, welches die erfasste Trittgröße des Nutzers repräsentiert, mittels einer Sensor-Kommunikationsschnittstelle per Funk an die Antriebsvorrichtung zu senden. Dadurch entfällt eine elektrische Kabelführung beziehungsweise Steckverbindung zum Datenaustauch, wodurch eine Montage beziehungsweise Demontage der Antriebsvorrichtung im beziehungsweise am Unterrohr des Elektrofahrrads weiter vereinfacht wird.

Es kann ferner vorgesehen sein, dass das Elektrofahrrad mindestens zwei separate Ausnehmungen im Unterrohr des Elektrofahrrads aufweist, welche dazu eingerichtet sind, jeweils ein Gehäuseteil des Gehäuses der Antriebsvorrichtung aufzunehmen. Dadurch kann die Stabilität eines Rahmens des Elektrofahrrads erhöht werden.

Weitere Vorteile ergeben sich aus der nachfolgenden Beschreibung von Ausführungsbeispielen mit Bezug zu den Figuren.
Figur 1: Elektrofahrrad
Figur 2: Antriebsvorrichtung

### Ausführungsbeispiele

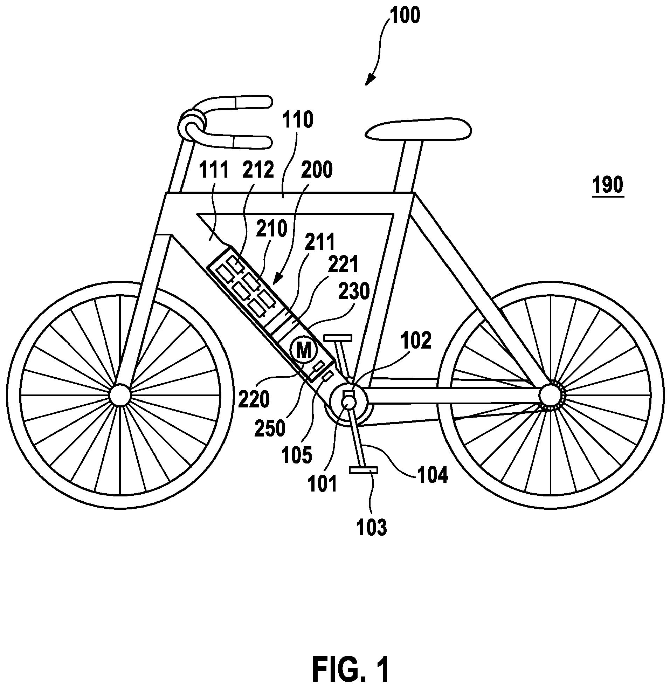

In Figur 1 ist ein Elektrofahrrad 100 mit einer Antriebsvorrichtung 200 in einer Umgebung 190 des Elektrofahrrads 100 schematisch dargestellt, wobei die Antriebsvorrichtung 200 am Unterrohr 111 eines Rahmens 110 des Elektrofahrrads angeordnet ist. Die Antriebsvorrichtung 200 umfasst ein Batteriemodul 210 und einen Elektromotor 220 als Antriebsmotor. Das Batteriemodul 210, welches mit einem Batterie Managementsystem (BMS) 211 verbunden ist, der Elektromotor 220 und ein Steuergerät 221 des Elektromotors sind in einem Gehäuse 230 der Antriebsvorrichtung 200 angeordnet. Die Antriebsvorrichtung 200 beziehungsweise das Gehäuse 230 ist in einer Ausnehmung des Unterrohrs 111 befestigt beziehungsweise montiert und kann vorzugsweise von einem Nutzer leicht demontiert beziehungsweise entnommen werden. Die Trittkraft des Nutzers des Elektrofahrrads 100 wird durch Pedale 103 und Kurbeln 104 an die Tretachse 101 übertragen. Im Bereich einer Tretachse 101 des Elektrofahrrads 100 ist eine Sensoreinheit 102 angeordnet. Vorzugsweise wird an der Tretachse 101 oder an einer mit der Tretachse 101 verbundenen Getriebekomponente mittels der Sensoreinheit 102 ein Drehmoment erfasst. Das erfasste Drehmoment repräsentiert die Trittkraft des Nutzers. Der Elektromotor 220 wird mittels eines Steuergeräts 221 beispielsweise in Abhängigkeit des erfassten Drehmoments angesteuert. Das Batteriemodul 210 umfasst eine Vielzahl an Energiespeichern beziehungsweise Batteriezellen 212. Das BMS 211 umfasst eine Recheneinheit 212, welche dazu eingerichtet ist, ein Laden und/oder Entladen des Batteriemoduls 210 zu steuern. Die Antriebsvorrichtung 200 weist eine Energieübertragungsvorrichtung 250 zur induktiven und/oder kapazitiven beziehungsweise kabellosen Energieübertragung an eine Energieempfangsvorrichtung 105 des Elektrofahrrads 100 auf. Die Energieübertragungsvorrichtung 250 ist ferner dazu eingerichtet, durch Modulation eines Stroms beziehungsweise durch Modulation einer Spannung der Energieübertragungsvorrichtung 250 Daten mit der Energieempfangsvorrichtung 105 des Elektrofahrrads 100 auszutauschen beziehungsweise Daten zu empfangen und/oder zu senden. Das Elektrofahrrad 100 beziehungsweise die Antriebsvorrichtung 200 ist dazu eingerichtet, wenigstens eine Komponente des Elektrofahrrads 100, insbesondere die Sensoreinheit 102, bevorzugt mehrere Komponenten des Elektrofahrrads 100, im Betrieb des Elektrofahrrads 100 mittels der induktiven und/oder kapazitiven Energieübertragung mit Energie zu versorgen und/oder Energie zu empfangen. Wasser kann beispielsweise durch ein Abstellen beziehungsweise Parken des Elektrofahrrads 100 im Regen oder alternativ durch eine Fahrt des Elektrofahrrads in feuchtem Gelände in die Ausnehmung des Unterrohrs 111 des Rahmens 110 des Elektrofahrrads 100 gelangen. Die Antriebsvorrichtung 200 weist bevorzugt keine Kabelverbindungen zur Energie und/oder zur Datenübertragung zum Elektrofahrrad 100 auf, weshalb ein Wassereintritt in die Ausnehmung des Unterrohrs 111 keinen schädigenden Einfluss hat, beispielsweise ist eine Spule der Energieübertragungsvorrichtung 250 im Gehäuse 230 beziehungsweise in oder an einem ersten und/oder zweiten Gehäuseteil 231, 232 vor einem Wasserkontakt beziehungsweise Korrosion geschützt.

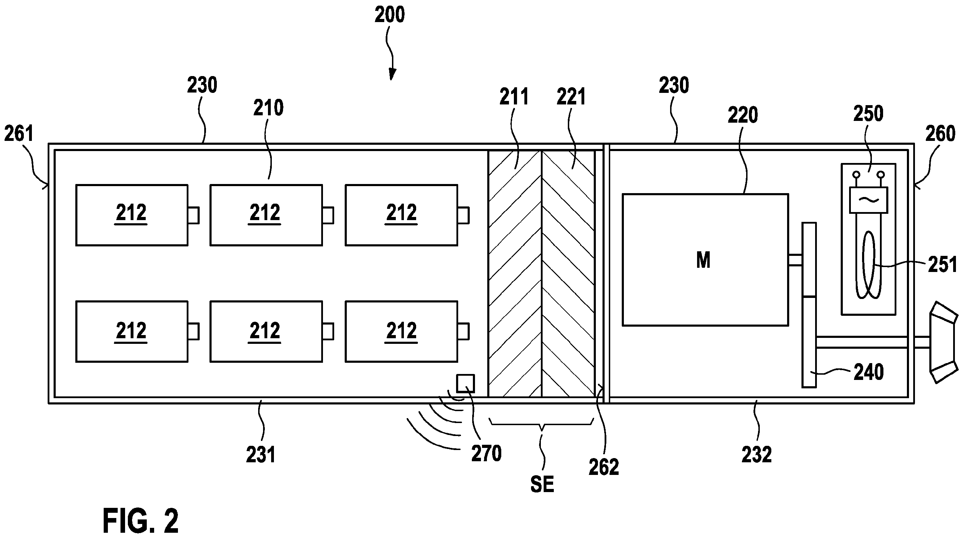

In Figur 2 ist die Antriebsvorrichtung 200 schematisch und gegenüber Fig. 1 vergrößert sowie detaillierter dargestellt. Die Antriebsvorrichtung 200 umfasst ein Batteriemodul 210 mit einer Vielzahl an Batteriezellen 212. Das Batteriemodul ist mit einem BMS 211 verbunden, welches dazu eingerichtet ist Lade-und Entladevorgänge des Batteriemoduls 210 zu steuern. Die Antriebsvorrichtung 200 umfasst ferner einen Elektromotor 220. Der Elektromotor 220 und das Batteriemodul 210 sowie das Steuergerät 221 und das BMS 211 sind in einem Gehäuse 230 aufgenommen beziehungsweise in dem Gehäuse 230 angeordnet. Das BMS 211 und das Steuergerät 221 sind vorzugsweise in einer Steuereinheit SE kombiniert beziehungsweise integriert. Mit anderen Worten umfasst die Steuereinheit SE das BMS 211 und das Steuergerät 221. Insbesondere weist die Steuereinheit eine Leiterplatte auf, welche das BMS 211 und das Steuergerät 221 umfasst. Mit anderen Worten umfasst eine Leiterplatte der Steuereinheit SE eine elektrische Schaltung, welche zumindest einen Schaltungsteil beziehungsweise der Funktionen des BMS 211 und des Steuergeräts 221 umfasst beziehungsweise realisiert. Vorzugsweise umfasst die Leiterplatte der Steuereinheit SE eine elektrische Schaltung des BMS 211 und eine elektrische Schaltung des Steuergeräts 221. Vorteilhafterweise ist das Gehäuse 230 wasser- und luftdicht verschlossen. Das Gehäuse 230 kann zweigeteilt ausgeführt sein, wobei vorteilhafterweise der erste Gehäuseteil 231 das Batteriemodul 210 und der zweite Gehäuseteil 232 den Elektromotor 220 umfasst. Der Elektromotor 220 ist dazu eingerichtet, ein motorisches Drehmoment, insbesondere in Abhängigkeit einer mittels der Sensoreinheit 102 des Elektrofahrrads 100 erfassten Trittgröße, zu erzeugen, wobei das motorische Drehmoment das vom Nutzer auf die Tretachse 101 aufgebrachte Drehmoment beim Antrieb des Elektrofahrrads 100 unterstützt. Beispielsweise erfolgt eine Übertragung des Motordrehmoments des Elektromotors 220 mittels eines Getriebes 240 (schematisch dargestellt) an ein Summiergetriebe (nicht dargestellt) des Elektrofahrrads 100 im Bereich der Tretachse 101. Das Summiergetriebe überträgt das Motordrehmoment und das Drehmoments des Fahrers beziehungsweise Nutzers bevorzugt mittels eines Abtriebritzels an ein Antriebsrad des Elektrofahrrads 100. Die Antriebsvorrichtung 200 weist ferner wenigstens eine Energieübertragungseinheit 250 auf. Die Energieübertragungseinheit 250 ist bevorzugt nah oder unmittelbar an einer äußeren Querschnittsfläche 260, 261 und/oder 262 der Antriebsvorrichtung 200 angeordnet. Dadurch kann Energie effizient von der Energieübertragungseinheit 250 an eine Energieempfangseinheit 105 des Elektrofahrrads 100 (siehe Figur 1) und/oder an ein anderes Gehäuseteil der Antriebsvorrichtung 200 übertragen werden, beispielsweise kann Energie auch effizient von einer Energieübertragungseinheit 250 des ersten Gehäuseteils 231 an eine Energieempfangseinheit 105 des zweiten Gehäuseteils 232 übertragen werden (nicht dargestellt). Die Energieübertragungseinheit 250 umfasst jeweils insbesondere einen Wechselrichter, welcher dazu eingerichtet ist, einen Gleichstrom des Batteriemoduls 210 in einen Wechselstrom umzuwandeln und an die Spule 251 zu übertragen. Die Energieübertragungseinheit 250 ist in Figur 2 neben dem Getriebe 240 angeordnet. Das Getriebe 240 greift in diesem Ausführungsbeispiel folglich nicht durch die Spule 251 hindurch, weshalb ein durch die Spule 251 erzeugtes Magnetfeld nicht oder kaum durch das Getriebe 240 beeinflusst ist. Alternativ verläuft das Getriebe 240 durch die Spule 251. Alternativ oder zusätzlich weist die Energieübertragungseinheit 250 einen Kondensatorteil auf (nicht dargestellt), welcher dazu eingerichtet ist, mit einem anderen Kondensatorteil an der Ausnehmung des Unterrohrs 111 des Elektrofahrrads 100 in Kontakt gebracht zu sein. Das Kondensatorteil ist beispielsweise an einem Aufnahmeelement für einen Rasthaken als Aufnahmesicherungselement der Antriebsvorrichtung 200 angeordnet. Ein Datenaustausch zwischen der Antriebsvorrichtung 200 und wenigstens einer Komponente des Elektrofahrrads 100 erfolgt bevorzugt mittels der Energieübertragungseinheit 250 und/oder der Energieempfangseinheit 105 durch Modulation eines Stroms beziehungsweise einer Spannung und/oder durch eine Funkverbindung mittels mindestens einer Kommunikationsschnittstelle 270 der Antriebsvorrichtung 200. Diese Kommunikationsschnittstelle 270 der Antriebsvorrichtung 200 ist dazu eingerichtet, Daten per Funk von einer Komponente des Elektrofahrrads 100, beispielsweise einer Sensor-Kommunikationsschnittstelle der Sensoreinheit 102, zu empfangen, insbesondere repräsentieren die Daten zumindest ein Sensorsignal von der Sensoreinheit 102.

## Patentansprüche

1. Antriebsvorrichtung (200), umfassend wenigstens
• einen Elektromotor (220),
• ein Batteriemodul (210), umfassend zumindest eine Batteriezelle (212), und
• ein Gehäuse (230), welches dazu eingerichtet ist, den Elektromotor (220) und das Batteriemodul (210) aufzunehmen,
• wobei die Antriebsvorrichtung (200) dazu eingerichtet ist, zumindest teilweise in wenigstens einer Ausnehmung eines Unterrohrs (111) eines Elektrofahrrads (100) angeordnet zu sein,
**dadurch gekennzeichnet, dass** die Antriebsvorrichtung (200) folgende Komponente aufweist
• mindestens eine Energieübertragungseinheit (250), welche dazu eingerichtet ist, induktiv und/oder kapazitativ Energie an das Elektrofahrrad (100) zu übertragen.

2. Antriebsvorrichtung (200) nach Anspruch 1, wobei sich das Gehäuse (230) in eine Längsrichtung erstreckt und die Energieübertragungseinheit (250) im Bereich einer außenliegenden Fläche des Gehäuses (230) angeordnet ist, insbesondere ist die Energieübertragungseinheit (250) im Bereich einer außenliegenden Querschnittsfläche (260, 261, 262) des Gehäuses (230) angeordnet.

3. Antriebsvorrichtung (200) nach einem der vorhergehenden Ansprüche, wobei die Energieübertragungseinheit (250) an einem Aufnahmesicherungselement des Gehäuses (230) angeordnet ist, wobei das Aufnahmesicherungselement dazu eingerichtet ist, das Gehäuse (230) in der Ausnehmung des Unterrohrs (111) des Elektrofahrrads (100) zu befestigen.

4. Antriebsvorrichtung (200) nach einem der vorhergehenden Ansprüche, wobei die Antriebsvorrichtung (200) folgende Komponente aufweist
• mindestens eine Kommunikationsschnittstelle (270), welche dazu eingerichtet ist, Daten per Funk von einer Komponente des Elektrofahrrads (100) zu empfangen, insbesondere repräsentieren die Daten zumindest ein Sensorsignal von einer Sensoreinheit (102) zur Erfassung einer Trittgröße eines Nutzers des Elektrofahrrads (100).

5. Antriebsvorrichtung (200) nach einem der vorhergehenden Ansprüche, wobei die Energieübertragungseinheit (250) dazu eingerichtet ist, Daten durch eine Modulation der Energieübertragung an eine Energieempfangseinheit (105) zu senden und/oder zu empfangen.

6. Antriebsvorrichtung (200) nach einem der vorhergehenden Ansprüche, wobei die Antriebsvorrichtung (200) folgende Komponente aufweist
• eine Steuereinheit (SE), wobei die Steuereinheit (SE) das Batterie Management System (BMS, 211) für das Batteriemodul (210) und das Steuergerät (221) für den Elektromotor (220) umfasst.

7. Antriebsvorrichtung (200) nach Anspruch 6, wobei die Steuereinheit (SE) das Batterie Management System (BMS, 211) und das Steuergerät (221) zumindest teilweise auf einer gemeinsamen Leiterplatte umfasst.

8. Antriebsvorrichtung (200) nach einem der vorhergehenden Ansprüche, wobei das Gehäuse (230) zumindest den Elektromotor (220) und/oder das Batteriemodul (210) gegenüber der Umgebung (190) wasser- und/oder luftdicht verschließt.

9. Antriebsvorrichtung (200) nach einem der vorhergehenden Ansprüche, wobei das Gehäuse (230) mindestens zweiteilig ist, wobei
• ein erster Gehäuseteil (231) des Gehäuses (230) das Batteriemodul (210) umfasst, und
• ein zweiter Gehäuseteil (232) des Gehäuses (230) den Elektromotor (220) umfasst.

10. Antriebsvorrichtung (200) nach Anspruch 9, wobei der zweite Gehäuseteil (232) des Gehäuses (230) die Steuereinheit (SE) nach Anspruch 6 oder 7 aufweist.

11. *Elektrofahrrad* (100), welches dazu eingerichtet ist, eine Antriebsvorrichtung (200) nach einem der Ansprüche 1 bis 10 aufzunehmen, wobei das Elektrofahrrad (100) mindestens eine Energieempfangseinheit (105) an wenigstens einer Ausnehmung im Unterrohr (111) eines Rahmens (110) des Elektrofahrrads (100) aufweist, wobei die Energieempfangseinheit (105) dazu eingerichtet ist, induktiv und/oder kapazitativ Energie und/oder Daten von der Antriebsvorrichtung (200) zu empfangen.

12. Elektrofahrrad (100) nach Anspruch 11, wobei die Energieempfangseinheit (105) an einem Aufnahmeelement im Bereich der Ausnehmung angeordnet ist, wobei das Aufnahmeelement dazu eingerichtet ist, das Gehäuse (230) der Antriebsvorrichtung (200) in der Ausnehmung des Unterrohrs (111) des Elektrofahrrads (100) zu befestigen.

13. Elektrofahrrad (100) nach einem der Ansprüche 11 oder 12, wobei das Elektrofahrrad (100) eine Sensoreinheit (SE) zur Erfassung einer Trittgröße eines Nutzers des Elektrofahrrads (100) aufweist, vorzugsweise ist diese Sensoreinheit (102) im Bereich der Tretachse (101) des Elektrofahrrads (100) angeordnet.

14. Elektrofahrrad (100) nach Anspruch 13, wobei die Sensoreinheit (102) dazu eingerichtet ist, ein Sensorsignal, welches die erfasste Trittgröße des Nutzers repräsentiert, mittels einer Sensor-Kommunikationsschnittstelle per Funk und/oder mittels der Energieempfangseinheit (105) durch Modulation der Energieübertragung an die Antriebsvorrichtung (200) zu senden.

15. Elektrofahrrad nach einem der Ansprüche 11 bis 14, wobei das Elektrofahrrad mindestens zwei separate Ausnehmungen im Unterrohr (111) des Elektrofahrrads (100) aufweist, welche dazu eingerichtet sind, jeweils ein Gehäuseteil (231, 232) des Gehäuses (230) der Antriebsvorrichtung (200) aufzunehmen.
